# EUROPÄISCHE PATENTSCHRIFT

(11) **EP 1 636 149 B1**
(45) Veröffentlichungstag und Bekanntmachung des Hinweises auf die Patenterteilung: **19.09.2007**
(21) Anmeldenummer: 04766082.4
(22) Anmeldetag: 25.06.2004
(51) Int. Cl.: C04B 41/87, G01N 27/30

(54) **VERFAHREN ZUR HERSTELLUNG EINER BEZUGSELEKTRODE**
METHOD FOR THE PRODUCTION OF A REFERENCE ELECTRODE
PROCEDE POUR PRODUIRE UNE ELECTRODE DE REFERENCE

(30) Priorität: 25.06.2003 EP 03101864
(43) Veröffentlichungstag der Anmeldung: 22.03.2006
(73) Patentinhaber: Mettler-Toledo AG, 8606 Greifensee (CH)
(72) Erfinder: MURER, Sacha, 6343 Rotkreuz (CH)
(86) Internationale Anmeldenummer: PCT/EP2004/051253
(87) Internationale Veröffentlichungsnummer: WO 2004/113256

(56) Entgegenhaltungen:
- EP-A- 0 243 309
- WO-A-91/12879
- GB-A- 2 273 672
- US-A- 4 170 537
- US-A- 4 711 719
- OKUBO TATSUYA ET AL: "Crack-free porous YSZ membrane via controlled synthesis of zirconia sol" J MEMBR SCI;JOURNAL OF MEMBRANE SCIENCE SEPT 18 1996, Bd. 118, Nr. 2, 18. September 1996 (1996-09-18), Seiten 151-157, XP002261486
- DATABASE WPI Section Ch, Week 198431 Derwent Publications Ltd., London, GB; Class E36, AN 1984-191736 XP002261488 & JP 59 107988 A (MITSUBISHI HEAVY IND CO LTD) 22. Juni 1984 (1984-06-22)
- ANONYM: "Gels" INTERNETARTIKEL, [Online] Seiten 1-2, XP002261487 Gefunden im Internet: URL:http://www.chemie.uni-hamburg.de/tmc/k ulicke/gels/gels.htm> [gefunden am 2003-11-12]

## Beschreibung

### Technisches Gebiet

Die Erfindung betrifft ein Verfahren zur Herstellung einer Bezugselektrode gemäss dem Oberbegriff des Anspruches 1 sowie eine Bezugselektrode gemäss dem Oberbegriff des Anspruches 13.

### Stand der Technik

Potentiometrische Messsonden zur Bestimmung von in Flüssigkeit gelösten Analyten, beispielsweise Wasserstoff (pH-Wert) oder Kohlendioxid, weisen häufig eine Bezugselektrode und eine Messelektrode auf. Diese sind insbesondere als Glaselektroden ausgebildet, die über ein in einer Elektrolytlösung eingetauchtes Ableitelement verfügen, wobei die elektrische Spannung, die sich zwischen dem Ableitelement der Messelektrode und dem Ableitelement der Bezugselektrode ausbildet, als Mass für die lonenkonzentration des gelösten Analyten dient. Dabei steht die Elektrolytlösung der Bezugselektrode in Kontakt mit dem zu messenden Medium, beziehungsweise der Messlösung, wobei vermittels Ladungsaustausch das Bezugselement auch in elektrischem Kontakt mit dem Messmedium steht. In Verbindung mit dem Ladungsaustausch findet ein Materialaustausch statt, wobei dieser einerseits möglichst niedrig gehalten wird und andererseits darauf ausgelegt ist, bevorzugt vom Bezugselektrolyten nach aussen in die Messlösung gerichtet zu sein. Insbesondere ist es bekannt, mit Hilfe eines Diaphragmas eine Verbindung zwischen einer Messlösung und einem im Inneren einer Bezugselektrode befindlichen Bezugselektrolyten zu schaffen. Eine derartige Verbindung weist einerseits eine gute elektrische Leitfähigkeit auf, wirkt aber andererseits als Barriere gegen eine unerwünschte Durchmischung von Messlösung und Bezugselektrolyt (siehe beispielsweise: H. Galster, "pH-Messung", VCH Verlagsgesellschaft (Weinheim) 1990, S. 83-84). Ein solches Diaphragma wird häufig in Form einer porösen Keramik in eine Öffnung der Wandung des vornehmlich aus Glas geformten Schafts einer Bezugselektrode eingeschmolzen.

Für die Verwendung als Diaphragmen haben sich vor allem poröse Keramiken aus Porzellan, Aluminiumoxid, Spinell, Forsterit und insbesondere Zirkonia (hier verwendet als gängige Bezeichnung für Zirkon(IV)-oxid ZrO₂) bewährt. Als besonders vorteilhaft haben sich poröse Keramiken aus sogenannten "stabilisiertem Zirkonia" erwiesen, welches Calciumoxid ("Calcia") oder Magnesiumoxid ("Magnesia") vorzugsweise Yttriumoxid ("Yttria") als stabilisierenden Zusatz enthält.

Stabilisiertes Zirkonia zeichnet sich durch eine gute chemische Korrosionsfestigkeit, insbesondere gegen alkalische Medien aus. Des Weiteren ist stabilisiertes Zirkonia temperaturbeständig und hat einen thermischen Ausdehnungskoeffizienten ähnlich demjenigen von Weichgläsern; demnach können Diaphragmen aus stabilisiertem Zirkonia problemlos in Glasgehäuse von Bezugselektroden und dergleichen eingeschmolzen werden.

Die Herstellung von porösen Zirkonia-Keramiken erfolgt durch Extrudieren von nassen Oxidpasten mit nachfolgendem Trocknen und Brennen, oder aber durch isostatisches Pressen von Oxidpulvern mit nachfolgendem Brennen. Die gewünschte Porosität ergibt sich aufgrund der gewählten Teilchengrösse und durch Verwendung einer Brenntemperatur, bei der sich die im Rohling befindlichen Poren nicht vollkommen schliessen, aber dennoch genügend Sinterung stattfindet, dass das Endprodukt eine ausreichende mechanische Festigkeit hat.

Es besteht ein Bedürfnis nach Diaphragmen, welche im Vergleich zu den bisher bekannten einen noch höheren Durchflusswiderstand bei nicht wesentlich verringerter elektrischer Leitfähigkeit aufweisen. Zu diesem Zweck wären poröse Keramiken erforderlich, die im Vergleich zu den bisher bekannten Keramiken wesentlich kleinere Poren bei ausreichendem Porenvolumen besitzen. Die Herstellung derartiger Keramiken durch Kontrolle des keramischen Rohmaterials und/oder der Brenntemperatur ist jedoch bislang nicht gelungen.

Eine Verkleinerung der Keramik-Poren, beispielsweise durch einen verlängerten Sinterprozess, hat unweigerlich eine entsprechende Verringerung der elektrischen Leitfähigkeit zur Folge, da bei diesem Prozess mit zunehmender Dauer sowohl der mittlere Durchmesser als auch die Häufigkeit der Poren stark abnehmen, was zu einem reduzierten Leitfähigkeitsquerschnitt führt.

Eine weitere bekannte Möglichkeit, wie sie von der Anmelderin seit längerem in ihren Produkten verwendet wird, ist das Verkleinern der Poren eines Diaphragmas aus einer porösen Keramik mittels Polymeren. Hierzu wird zuerst das Diaphragma im Glasschaft der Bezugselektrode eingeschmolzen, da das Einschmelzen später das Polymer zerstören würde. Nachteilig ist hier jedoch eine beobachtete Verringerung der Leitfähigkeit mit zunehmender Polymeraufnahme durch das Diaphragma.

Eine andere bekannte Massnahme, den Materialfluss durch das Diaphragma einer Bezugselektrode gemäss dem Stand der Technik gering zu halten, ist die Verwendung einer Elektrolytlösung mit erhöhter Viskosität. Dies wird durch die Zugabe eines Verdickungsmittels zum Elektrolyten erreicht, wie z.B. Hydroxyethylzellulose (Natrosol), oder eines in Wasser löslichen Polymers wie zum Beispiel Polyacrylamid, Agar, Pyrolidon oder Polyvinylalkohol. Der Nachteil einer solchen Lösung liegt in der starken Temperaturabhängigkeit der Viskosität des Elektrolyten und der dadurch bedingten erhöhten Ausflussfähigkeit desselben bei hohen Anwendungstemperaturen der Sonde. Ausserdem besteht die Gefahr einer progressiven Selbstverstopfung des Diaphragmas durch die im Elektrolyt gelösten Makromoleküle, wobei der so genannte "Knäueldurchmesser" eines Makromoleküls in der Regel den des Durchmessers der Poren im Diaphragma übersteigt.

### Darstellung der Erfindung

Aufgabe der Erfindung ist es, ein verbessertes Verfahren zur Herstellung einer Bezugselektrode anzugeben. Eine weitere Aufgabe der Erfindung besteht darin, eine verbesserte Bezugselektrode anzugeben. Dabei sind die oben erwähnten Nachteile, die einerseits bei Veränderung des Diaphragmas gemäss dem Stand der Technik, und die andererseits bei Verwendung eines Elektrolyten mit erhöhter Viskosität auftreten, zu vermeiden.

Gelöst werden diese Aufgaben durch das im Anspruch 1 definierte Verfahren sowie durch die im Anspruch 13 definierte Bezugselektrode.

Das erfindungsgemässe Verfahren beruht auf einer kontrollierten Porenverkleinerung einer porösen Keramik, aus welcher ein Diaphragmakörper für eine Bezugselektrode hergestellt wird, die einen Schaft, insbesondere einen Glas- oder Kunststoffschaft, aufweist, in welchen der Diaphragmakörper eingearbeitet wird, und umfasst die folgenden Schritte:
a) Bereitstellen einer porösen Keramik;
b) Imprägnieren der porösen Keramik mit einem Lyogel-Vorläufer;
c) Überführen des Lyogel-Vorläufers in ein Lyogel;
d) Entfernen des Lösungsmittels durch Trocknen und
e) Einbringen des derart gebildeten Diaphragmakörpers in den Schaft.

Als Ausgangsstoff dient dabei eine herkömmliche, gewünschtenfalls handelsübliche, poröse Keramik. Diese weist eine anfängliche Porosität auf, die sich durch das vorliegende Porengebilde, das heisst durch ein die Keramik durchdringendes Hohlraumsystem ergibt. Die bereitgestellte poröse Keramik wird anschliessend mit einem Lyogel-Vorläufer imprägniert, welcher in einem nächsten Verfahrensschritt in ein Lyogel überführt wird. Der Begriff "Lyogel" ist hier als Oberbegriff für eine Mehrzahl unterschiedlicher Gele zu verstehen, die je nach Art ihrer flüssigen Komponente unterschiedlich bezeichnet werden. Insbesondere fallen unter diesen Oberbegriff die wasserhaltigen "Aquagele" oder "Hydrogele" (siehe beispielsweise: J. Falbe, M. Regitz, Hsg., "Römpp Chemie Lexikon", Georg Thieme Verlag (Stuttgart) 1990, Band 2, S. 1511). Als Lyogel-Vorläufer kommen eigentliche Lösungen oder aber so genannte "Lyosole" in Frage, wobei analog zu obigen Begriffsbildungen die Vorläufer wasserhaltiger Aquagele als "Aquasole" bezeichnet werden.

Dadurch, dass die Hohlräume der porösen Keramik mindestens teilweise mit Lyogel befüllt werden, ergibt sich eine poröse Keramik mit verkleinerten Poren.

Mit der Methode der kontrollierten Porenverkleinerung kann für die Bezugselektrode ein Elektrolyt ohne makromolekulare Verdickungsmittel verwendet werden. Damit werden die oben genannten Probleme der stark temperaturabhängigen Viskosität und der Selbstverstopfung umgangen.

Überraschenderweise hat sich gezeigt, dass die elektrische Leitfähigkeit über das Diaphragma der nach obigem Verfahren hergestellten Bezugselektrode gegenüber einer solchen die ein Diaphragma mit gemäss dem Stand der Technik verkleinerten Poren aufweist, nahezu unverändert geblieben ist.

Die erfindungsgemässe Bezugselektrode, umfasst einen mit Elektrolyt befüllten Schaft, insbesondere einen Glas- oder Kunststoffschaft, in dessen Wandung ein ein Hohlraumsystem beinhaltender Diaphragmakörper aus einer porösen Keramik eingearbeitet ist, wobei das Hohlraumsystem mindestens teilweise mit einem aus einem Lyogel durch Trocknung gebildeten Material befüllt ist, welches zumindest eine dem Keramik-Material entsprechende Komponente aufweist.

Insbesondere kann dabei ein Grad der Befüllung der Keramik mit dem Lyogel gewählt werden, der einer gewünschten Porengrösse entspricht.

Aufgrund der Tatsache, dass das Hohlraumsystem einer porösen Keramik in aller Regel eine Vielzahl von Kanälen und Hohlräumen unterschiedlicher Grösse aufweist, ist auch im vorliegenden Zusammenhang der Begriff der "Porengrösse" als ein Mass für eine Verteilung zu verstehen, die beispielsweise durch Mittelwert, Standardabweichung oder andere statistische Kennzahlen charakterisierbar ist. Entsprechend ist auch der Bergriff der "Porenverkleinerung" vor dem Hintergrund einer Verteilung zu verstehen.

Vorteilhafte Ausgestaltungen der Erfindung sind in den abhängigen Ansprüchen definiert.

Die Ansprüche 2 bis 12 beziehen sich auf bevorzugte Ausführungsformen des erfindungsgemässen Verfahrens, die Ansprüche 14 und 15 auf bevorzugte Ausgestaltungen der erfindungsgemässen Bezugselektrode.

In bevorzugter Weise ist als weiterer Verfahrensschritt vorgesehen, dass das aus dem Lyogel-Vorläufer gebildete Lyogel in ein Aerogel übergeführt wird, was durch Entfernen von Lösungsmittel aus dem Lyogel bewerkstelligt wird. Es liegt im Sinne eines getrockneten, gegenüber dem Lyogel kaum geschrumpften Gels in den Poren der Keramik ein Aerogel vor, da bei dieser Umwandlung das räumliche Gefüge der zunächst im Lyogel vorliegenden festen Komponente im wesentlichen erhalten bleibt, wobei das Lösungsmittel durch Luft oder allenfalls durch ein anderes Gas ersetzt wird (siehe ebenfalls: J. Falbe, M. Regitz, Hsg., "Römpp Chemie Lexikon", Georg Thieme Verlag (Stuttgart) 1990, Band 2, S. 1511). Dadurch, dass die Mikroporen der Keramik mindestens teilweise mit nanoporösem Aerogel befüllt werden, ergibt sich eine sehr feinporige Keramik. Erforderlichenfalls wird die Schrittfolge bestehend aus Imprägnieren der porösen Keramik mit einem Lyogel-Vorläufer, Überführen des Lyogel-Vorläufers in ein Lyogel und Überführen des Lyogels in ein Aerogel mehrmals durchlaufen, wobei mit jedem Durchgang eine weitere Porenverkleinerung herbeigeführt wird, bis zum Erreichen einer anwendungsspezifisch definierten Porenverkleinerung.

Die Aerogel-Bildung wird vorzugsweise vermittels einer Trocknung durchgeführt, indem die poröse Keramik einer Wärmebehandlung unterzogen wird. Dies ist insbesondere in all den Fällen angezeigt, in welchen nachträglich das Diaphragma - in einen Elektrodenschaft aus Glas oder dergleichen eingeschmolzen wird.

Grundsätzlich kann das Verfahren mit verschiedenen Arten von poröser Keramik durchgeführt werden. Als Beispiele seien hier genannt: Alumina/Zirconia Spinels, ferner Alumina, Magnesia oder Silica entweder allein oder in Kombinationen, wie beispielsweise Silmanit (Al₂O₃ · SiO₂), Mullite (3Al₂O₃. · 2SiO₂), Forsterite (2MgO · SiO₂), Spinel (MgO · Al₂O₃), oder Cordierite (2MgO · 2Al₂O₃ · 5SiO₂).

In bevorzugter Ausführung werden Keramiken aus Zirkonia, insbesondere aus stabilisiertem Zirkonia, welches Calciumoxid (Calcia) oder Magnesiumoxid (Magnesia) vorzugsweise Yttriumoxid (Yttria) als stabilisierenden Zusatz enthält, verwendet, was vor allem für gewisse elektrochemische Anwendungen von Vorteil ist.

Es können verschiedene Arten von Lyogel-Vorläufem verwendet werden. Beispielsweise kann als Lyogel-Vorläufer ein Lyosol eingesetzt werden, wobei es sich insbesondere um eine stabilisierte wässrige Suspension von Nanopartikeln, ausgewählt aus der von Zirkonia, Zirkonia/Calcia und Zirkonia/Yttria gebildeten Gruppe, handelt. Alternativ kann der Lyogel-Vorläufer auch in Form einer Lösung zugeführt werden. Vorzugsweise wird als Lyogel-Vorläufer eine wässrige Zirkoniumlösung oder eine organische Zirkonylverbindung oder eine Zirkonverbindung in organischem Lösemittel verwendet.

Das Überführen des Lyogel-Vorläufers in das Lyogel wird bevorzugt durch eine Destabilisierung des Lyosols, beispielsweise durch eine Veränderung des pH-Wertes hervorgerufen. Besonders vorteilhaft ist dabei die Ausführungsform, wonach die Veränderung des pH-Wertes mittels einer Base vorgenommen wird. Als Base kommt eine Ammoniak-Lösung in Frage; alternativ ist jedoch auch eine Base aus der Gruppe der leichtflüchtigen organischen Amine, insbesondere Isopropylamin, Propylamin, Tetramethylaminomethan oder Triethylamin verwendbar. In besonderer Ausführungsform kann die Base gasförmig sein.

Erforderlichenfalls kann dem Lyogel-Vorläufer noch vor dem Imprägnieren der porösen Keramik ein Gelierungsmittel zugegeben werden, wodurch nach dem Imprägnieren die erwünschte Umwandlung des Lyogel-Vorläufers in das Lyogel hervorgerufen wird.

Die erfindungsgemässe Bezugselektrode weist bevorzugt einen Diaphragmakörper aus einer porösen Keramik auf, welche aus Zirkonia, insbesondere stabilisiertem Zirkonia gebildet ist.

Das die Poren des Diaphragmakörpers vekleinernde Lyogel wurde in einer vorteilhaften Ausgestaltung der Bezugselektrode aus der von Zirkonia, Zirkonia/Calcia, Zirkonia/Magnesia und Zirkonia/Yttria gebildeten Gruppe gewählt.

### Wege zur Ausführung der Erfindung

Die Erfindung wird nachfolgend anhand von Ausführungsbeispielen näher beschrieben.

### Beispiel 1

Diaphragmastäbe aus porösem stabilisiertem Zirkonia mit Durchmesser 1.1 mm und Länge 100 mm wurden in eine Kristallisierschale gelegt. Danach wurde die Kristallisierschale mit Zirkonia-Sol gefüllt, so dass alle Diaphragmastäbe komplett eingetaucht waren. Anschliessend wurde die Kristallisierschale in einen Vakuum-Exsikkator gelegt und während 30 min die Luft aus den Diaphragmastäben ausgetrieben. Als Nächstes wurde der Exsikkator wieder belüftet und die Kristallisierschale mit Inhalt während 30 min stehen gelassen. Nach dieser Wartezeit wurden die Stäbe mit einer Pinzette aus der Kristallisierschale entnommen. '

Ein Becherglas mit abgerundeter Öffnung wurde bereitgestellt und mit 100 ml konzentrierter wässriger Base befüllt. Anschliessend wurden die Diaphragmastäbe in das Becherglas gegeben. Danach wurde das Becherglas mit einem Uhrglas abgedeckt und das Ganze über Nacht stehen gelassen.

Am nächsten Morgen wurden die Diaphragmastäbe aus dem Becherglas genommen, auf einem Uhrglas in einen auf 80°C vorgeheizten Ofen gestellt und dort während 30 min getrocknet. Schliesslich wurden die Diaphragmastäbe in einen auf 500°C vorgeheizten Muffelofen gelegt und dort während 45 min stehen gelassen. Nach Entnahme aus dem Muffelofen wurde das Uhrglas mit den Diaphragmastäben während 3 Stunden abkühlen gelassen. Damit ist ein Verstopfungsvorgang beziehungsweise Verkleinerungsvorgang abgeschlossen.

Anschliessend wurden die Keramikstäbe auf eine für den Diaphragmakörper geeignete Grösse zugeschnitten. Es versteht sich, dass der beschriebene Prozess nicht nur auf Diaphragmastäbe anwendbar ist, sondern auch auf Keramikkörper, deren Grösse bereits dem eines Diaphragmakörpers entspricht. Der Diaphragmakörper wurde in den Schaft der Bezugselektrode eingeschmolzen. Alternativ kann er auch eingeklebt werden.

### Beispiel 2

Die im Beispiel 1 aufgeführten Schritte wurden wiederholt, das heisst mit Diaphragmastäben durchgeführt, die bereits einem oder mehreren Verstopfungsvorgängen unterzogen worden waren, bis zum Erreichen eines vorgegebenen Verstopfungsgrades. Beispielsweise wurden auf diese Weise ausgehend von Diaphragmastäben mit einem Porenvolumenanteil von 30 bis 40% und einer Gerüstdichte von ungefähr 5.8 g/cm³ Diaphragmastäbe mit einem auf die Hälfte verminderten Porenvolumenanteil von 15 bis 20% aber kaum verminderter Gerüstdichte hergestellt.

### Beispiel 3

Der Prozess des über Nacht-Aufbewahrens der Diaphragmastäbe in einem Becherglas, welches mit 100 ml einer konzentrierten wässrigen Base befüllt war, wie in Beispiel 1 beschrieben, wurde alternativ derart realisiert, dass die Diaphragmastäbe nicht in die Base eintauchten, sondern sich oberhalb des Flüssigkeitsspiegels in der Gasphase der Base befanden, wobei das Gas gleichmässig in die Keramik-Poren eindringen konnte.

### Beispiel 4

Die nachfolgende Tabelle zeigt einen Vergleich zwischen einem gemäss obigen Beispielen behandelten Diaphragma und einem unbehandelten Diaphragma.

**Tabelle: Vergleich von unbehandeltem und behandeltem Diaphragma**

| | Unbehandeltes Diaphragma | Behandeltes Diaphragma |
|---|---|---|
| Wasser-Durchflussrate (g / 24 Std) bei einer Druckdifferenz von 5 bar | 1.5 - 2.0 | 0.2 - 0.4 |
| elektrischer Widerstand (kOhm) | 5 - 10 | 5 - 10 |
| Offene Porosität (%) | 20 - 38 | 15 - 20 |

Die obigen Ergebnisse zeigen, dass das behandelte Diaphragma zwar eine wesentlich geringere Wasserdurchflussrate als das unbehandelte Diaphragma aufweist, dass aber bezüglich des elektrischen Widerstandes kein Unterschied feststellbar ist. Mit anderen Worten zeichnet sich das behandelte Diaphragma durch einen höheren Strömungswiderstand bei nicht beeinträchtigter elektrischer Leitfähigkeit aus.

## Patentansprüche

1. Verfahren zum Herstellen einer Bezugselektrode, die einen Schaft aufweist, in welchen ein aus einer porösen Keramik gebildeter Diaphragmakörper eingearbeitet wird, **dadurch gekennzeichnet, dass** die Keramik vor dem Einarbeiten in den Schaft mit einem Lyogel-Vorläufer imprägniert wird, der anschliessend in ein Lyogel übergeführt wird, aus welchem durch einen Trocknungsprozess das Lösungsmittel entfernt wird.

2. Verfahren nach Anspruch 1, **dadurch gekennzeichnet, dass** beim Trocknungsprozess das Lyogel in ein Aerogel übergeführt wird.

3. Verfahren nach Anspruch 1 oder 2, **dadurch gekennzeichnet, dass** eine poröse Keramik aus Zirkonia, insbesondere aus stabilisiertem Zirkonia verwendet wird.

4. Verfahren nach Anspruch 3, **dadurch gekennzeichnet, dass** die poröse Keramik Calciumoxid (Calcia) oder Magnesiumoxid (Magnesia) oder Yttriumoxid (Yttria) als stabilisierenden Zusatz enthält.

5. Verfahren nach einem der Ansprüche 1 bis 4, **dadurch gekennzeichnet, dass** als Lyogel-Vorläufer eine wässrige Suspension von Nanopartikeln, ausgewählt aus der von Zirkonia, Zirkonia/Calcia, Zirkonia/Magnesia und Zirkonia/Yttria gebildeten Gruppe, verwendet wird.

6. Verfahren nach einem der Ansprüche 1 bis 4, **dadurch gekennzeichnet, dass** als Lyogel-Vorläufer eine wässrige Zirkoniumlösung oder eine organische Zirkonylverbindung oder eine Zirkonverbindung in organischem Lösemittel verwendet wird.

7. Verfahren nach einem der Ansprüche 1 bis 6, **dadurch gekennzeichnet, dass** das Überführen des Lyogel-Vorläufers in das Lyogel durch eine Veränderung des pH-Wertes hervorgerufen wird.

8. Verfahren nach Anspruch 7, **dadurch gekennzeichnet, dass** die Veränderung des pH-Wertes mittels einer Base vorgenommen wird.

9. Verfahren nach Anspruch 8, **dadurch gekennzeichnet, dass** die Base eine Ammoniak-Lösung ist.

10. Verfahren nach Anspruch 8, **dadurch gekennzeichnet, dass** die Base aus der Gruppe der leichtflüchtigen organischen Amine, insbesondere Isopropylamin, Propylamin, Tetramethylaminomethan oder Triethylamin ist.

11. Verfahren nach einem der Ansprüche 8 bis 10, **dadurch gekennzeichnet, dass** die Base gasförmig ist.

12. Verfahren nach einem der Ansprüche 1 bis 11, **dadurch gekennzeichnet, dass** man dem Lyogel-Vorläufer vor dem Imprägnieren der porösen Keramik ein Gelierungsmittel zugibt.

13. Bezugselektrode mit einem mit Elektrolyt befüllten Schaft, in dessen Wandung ein aus einer porösen Keramik gebildeter, ein Hohlraumsystem beinhaltender Diaphragmakörper eingearbeitet ist, **dadurch gekennzeichnet, dass** das Hohlraumsystem mindestens teilweise mit einem aus einem Lyogel durch Trocknung gebildeten Material befüllt ist, welches zumindest eine dem Keramik-Material entsprechende Komponente aufweist.

14. Bezugselektrode nach Anspruch 13, **dadurch gekennzeichnet, dass** die Keramik aus Zirkonia, insbesondere stabilisiertem Zirkonia gebildet ist.

15. Bezugselektrode nach Anspruch 13 oder 14, **dadurch gekennzeichnet, dass** das Lyogel aus der von Zirkonia, Zirkonia/Calcia, Zirkonia/Magnesia und Zirkonia/Yttria gebildeten Gruppe ausgewählt ist.

## Claims

1. Method of manufacturing a reference electrode, said reference electrode having a shaft into which a diaphragm body of a porous ceramic is incorporated, **characterized in that** prior to incorporating the ceramic into the shaft, the ceramic is impregnated with a lyogel precursor that is subsequently transformed into a lyogel from which the solvent is removed through a drying process.

2. Method according to claim 1, **characterized in that** in the drying process the lyogel is transformed into an aerogel.

3. Method according to claim 1 or 2, **characterized in that** a porous ceramic of zirconia, in particular of stabilized zirconia, is used.

4. Method according to claim 3, **characterized in that** the porous ceramic contains calcium oxide (calcia) or magnesium oxide (magnesia) or yttrium oxide (yttria) as a stabilizing additive.

5. Method according to one of the claims 1 to 4, **characterized in that** as a lyogel precursor an aqueous suspension of nano particles is used which is selected from the group that is constituted of zirconia, zirconia/calcia, zirconia/magnesia, and zirconia/yttria.

6. Method according to one of the claims 1 to 4, **characterized in that** an aqueous zirconium solution or an organic zirconyl compound or a zirconium compound in an organic solvent is used as a lyogel precursor.

7. Method according to one of the claims 1 to 6, **characterized in that** the transformation of the lyogel precursor into the lyogel is induced by a change of the pH value.

8. Method according to claim 7, **characterized in that** the change of the pH value is effected by means of a base.

9. Method according to claim 8, **characterized in that** the base is an ammonia solution.

10. Method according to claim 8, **characterized in that** the base is from the group of the volatile organic amines, in particular isopropylamine, propylamine, tetramethyl amino methane, or triethylamine.

11. Method according to one of the claims 8 to 10, **characterized in that** the base is a gas.

12. Method according to one of the claims 1 to 11, **characterized in that** a gelating agent is added to the lyogel precursor prior to impregnating the porous ceramic.

13. Reference electrode having a shaft that is filled with electrolyte, wherein a diaphragm body formed of a porous ceramic and containing a system of hollow spaces is incorporated into the wall of the shaft, **characterized in that** the system of hollow spaces is filled at least partially with a material formed of a lyogel by drying, said material comprising at least one component that corresponds to the ceramic material.

14. Reference electrode according to claim 13, **characterized in that** the ceramic is formed of zirconia, in particular stabilized zirconia.

15. Reference electrode according to claim 13 or 14, **characterized in that** the lyogel is selected from the group that is constituted of zirconia, zirconia/calcia, zirconia/magnesia, and zirconia/yttria.

## Revendications

1. Procédé pour fabriquer une électrode de référence, qui présente une tige dans laquelle est intégré un corps de diaphragme formé d'une céramique poreuse, **caractérisé en ce que** la céramique est imprégnée avant l'insertion dans la tige avec un avant-produit de lyogel qui est transformé ensuite en un lyogel duquel le soldant est enlevé par un processus de séchage.

2. Procédé selon la revendication 1, **caractérisé en ce que**, lors du processus de séchage, le lyogel est transformé en un aérogel.

3. Procédé selon la revendication 1 ou 2, **caractérisé en ce qu'**une céramique poreuse à base de zirconite, en particulier à base de zircone stabilisée est utilisée.

4. Procédé selon la revendication 3, **caractérisé en ce que** la céramique poreuse contient de l'oxyde de calcium (calcie) ou de l'oxyde de magnésium (magnésie) ou de l'oxyde d'yttrium (yttrie) comme auditif stabilisant.

5. Procédé selon l'une quelconque des revendications 1 à 4, **caractérisé en ce que**, comme avant-produit de lyogel, on utilise une suspension aqueuse de nanoparticules, sélectionnée parmi le groupe formé par la zirconie, la zirconie/calcie, la zirconie/magnésie et la zirconie/yttrie.

6. Procédé selon l'une quelconque des revendications 1 à 4, **caractérisé en ce que**, comme avant-produit de lyogel, on utilise une solution aqueuse de zirconium ou un composé organique de zirconyl ou un composé de zirconium dans du solvant organique.

7. Procédé selon l'une quelconque des revendications 1 à 6, **caractérisé en ce que** la transformation de l'avant-produit de lyogel en lyogel est provoquée par une modification de la valeur pH.

8. Procédé selon la revendication 7, **caractérisé en ce que** la modification de la valeur pH est effectuée au moyen d'une base.

9. Procédé selon la revendication 8, **caractérisé en ce que** la base est une solution d'ammoniac.

10. Procédé selon la revendication 8, **caractérisé en ce que** la base est choisie parmi le groupe des amines organiques volatiles, en particulier isopropylamine, propylamine, tétraméthylaminométhane ou triéthylamine.

11. Procédé selon l'une quelconque des revendications 8 à 10, **caractérisé en ce que** la base est gazeuse.

12. Procédé selon l'une quelconque des revendications 1 à 11, **caractérisé en ce qu'**on ajoute à l'avant-produit de lyogel un gélifiant avant l'imprégnation de la céramique poreuse.

13. Electrode de référence avec une tige remplie d'électrolyte, dans la paroi de laquelle est intégré un corps de diaphragme formé dans une céramique poreuse et contenant un système de cavité, **caractérisée en ce que** le système de cavité est rempli au moins partiellement avec un matériau formé à base d'un lyogel par séchage, qui présente au moins un composant corresponadnt au matériau de céramique.

14. Electrode de référence selon la revendication 13, **caractérisée en ce que** la céramique est formée à base de zirconie, en particulier de la zirconie stabilisée.

15. Electrode de référence selon la revendication 13 ou 14, **caractérisée en ce que** le lyogel est choisi parmi le groupe formé par la zirconie, la zirconie/calcie, la zirconie/magnésie et la zirconie/yttrie.
